# EUROPÄISCHE PATENTSCHRIFT

(11) **EP 3 047 253 B1**
(45) Veröffentlichungstag und Bekanntmachung des Hinweises auf die Patenterteilung: **19.08.2020**
(21) Anmeldenummer: 13766928.9
(22) Anmeldetag: 18.09.2013
(51) Int. Cl.: G01N 19/04

(54) **VERFAHREN UND VORRICHTUNG ZUR ERMITTLUNG DER ABRIEBEIGENSCHAFTEN EINES BESCHICHTETEN FLACHPRODUKTS**
METHOD AND APPARATUS FOR DETERMINATION OF WEAR PROPERTIES OF A COATED FLAT PRODUCT
PROCÉDÉ ET DISPOSITIF POUR DÉTERMINATION DES CARACTÉRISTIQUES D'USURE D'UN PRODUIT PLAT REVÊTU

(43) Veröffentlichungstag der Anmeldung: 27.07.2016
(73) Patentinhaber: ThyssenKrupp Steel Europe AG, 47166 Duisburg (DE)
(72) Erfinder: SCHWANKE, Heinz-Günter, 46049 Oberhausen (DE); HUEPER, Thomas, 47441 Moers (DE); URAN, Klaus, 47447 Moers (DE); YANIK, Robert, 33100 Paderborn (DE)
(74) Vertreter: Cohausz & Florack
(86) Internationale Anmeldenummer: PCT/EP2013/069407
(87) Internationale Veröffentlichungsnummer: WO 2015/039685

(56) Entgegenhaltungen:
- EP-A2- 0 104 369
- WO-A1-96/27977
- WO-A1-2004/063410
- CA-C- 2 006 756
- DE-A1-102011 010 315
- DE-U1- 20 010 467
- JP-A- 2000 064 013
- JP-A- 2011 127 216
- KR-A- 20070 003 366
- KR-A- 20120 074 144
- US-A1- 2008 083 477

## Beschreibung

Die Erfindung betrifft ein Verfahren zur Ermittlung der Abriebeigenschaften eines beschichteten Flachprodukts, vorzugsweise Metallflachprodukt, insbesondere verzinktes Stahlflachprodukt. Ferner betrifft die Erfindung eine Vorrichtung zur Ermittlung der Abriebeigenschaften eines solchen beschichteten Flachprodukts.

Eine für viele Anwendungen wesentliche Eigenschaft von beschichteten Flachprodukten ist die Abriebfestigkeit der Beschichtung. Daher werden bei der Herstellung entsprechender Flachprodukte hohe Anforderungen an die Abriebneignung der Beschichtung gestellt. Unter beschichteten Flachprodukten werden insbesondere Metall-, Stahl-, Leichtmetall- oder Verbundflachprodukte verstanden, wobei diese beispielsweise als Band, Blech, Zuschnitt oder Platine vorliegen können. Weiter vorzugsweise kann es sich bei diesen Produkten um warm- oder kaltgewalzte Produkte handeln. Hinsichtlich der Beschichtung kommen beispielsweise Zinkbeschichtungen in Frage, die durch Feuerverzinken oder eine elektrolytische Verzinkung etwa eines Stahlflachprodukts bereitgestellt werden können.

Aufgrund der hohen Anforderungen an die Beschichtungen von entsprechenden Flachprodukten besteht zum Zwecke der Qualitätssicherung ein hohes Interesse, die Abriebeigenschaften reproduzierbar und quantifizierbar bestimmen zu können. Bei ganvannealed beschichteten Stahlbänder, die sowohl verzinkt (galvanized) als auch geglüht (annealed) sind, kommen beispielsweise in der Automobilindustrie etwa als Außenhautteile, Verstärkungen oder Innenteile zum Einsatz und müssen daher hohe Oberflächenanforderungen erfüllen. Dabei kann das sogenannte Powdering problematisch sein, das eine Art des Abriebs der Zinkbeschichtung beim Umformen beschreibt, bei dem Partikel der Beschichtung ausbrechen. Davon wird typischerweise das Flaking unterschieden, bei dem es sich um ein flächiges Ablösen der Beschichtung handelt.

Die Neigung eines beschichteten Flachprodukts zum Powdering kann mit dem sogenannten Klebestreifenbiegetest abgeschätzt werden. Dabei wird ein Klebestreifen auf eine Werkstückprobe aufgeklebt und diese im Bereich des Klebestreifens stark gebogen, wobei es regelmäßig zu einem Powdering kommt. Die ausgebrochenen Partikel der Beschichtung bleiben an dem Klebestreifen haften, der nach dem Biegen, meist erst nach einem Zurückbiegen (Plätten) in den Ausgangszustand, abgezogen wird. Anschließend wird der Klebestreifen auf einen weißen Untergrund geklebt, so dass sich die Partikel der Beschichtung als grauer Belag abzeichnen. Wenn die Biegung entlang einer Biegelinie erfolgt ist, liegen die ausgebrochenen Partikel ebenfalls in Form einer Linie vor. Der Grad des Powdering wird anhand der Schwärzung der Linie durch die Partikel der Beschichtung oder anhand der Breite der Linie aus Partikeln der Beschichtung bestimmt. Da die Schwärzung in einer Richtung quer zur Biegelinie variiert und zu den Rändern langsam ausläuft, ist die Bestimmung der Schwärzung oder der Breite der Linie in hohem Maße subjektiv.

Des Weiteren sind Verfahren wie der Doppel-Olsen-Test, der Näpfchenziehversuch, der Hutprofiltest oder der Streifenziehversuch bekannt. Diese Verfahren führen jedoch ebenfalls nicht zu zufriedenstellenden Ergebnissen, da diese insgesamt wenig reproduzierbar sind. Zudem können die prüfbaren Flachprodukte hinsichtlich ihrer Dicke und Festigkeit beschränkt sein.

Die Patentschrift JP 2011 127216 A offenbart ein Verfahren zur Ermittlung der Abriebeigenschaften eines beschichteten Flachprodukts nach dem Oberbegriff des Anspruchs 1 und eine Vorrichtung zur Ermittlung der Abriebeigenschaften eines beschichteten Flachprodukts nach dem Oberbegriff des Anspruchs 17.

Der vorliegenden Erfindung liegt daher die Aufgabe zugrunde, das Verfahren und die Vorrichtung der eingangs genannten und zuvor näher beschriebenen Art derart auszugestalten und weiterzubilden, dass die Abriebeigenschaften eines beschichteten Flachprodukts objektiver, aussagekräftiger und reproduzierbarer charakterisiert werden können.

Diese Aufgabe ist durch ein Verfahren gemäß Anspruch 1 gelöst.

Zudem ist die Aufgabe durch eine Vorrichtung nach dem Oberbegriff des Anspruchs 17 gelöst.

Bevorzugt wird der Klebestreifen vor dem Biegen auf das Flachprodukt geklebt, dies kann aber auch erst nachträglich erfolgen, wobei jedoch die Gefahr größer ist, dass nicht aller Abrief der Analyse unterzogen wird, weil dieser vom Klebestreifen nicht vollständig aufgenommen wird. Bevorzugt kann das Flachprodukt nach dem Biegen geplättet und somit wieder im Wesentlichen in den Ausgangszustand zurückgebogen werden. Der Abrieb wird so besser freigegeben. Der Klebestreifen sollte aber bereits vor dem Plätten aufgebracht werden.

Gemäß der Erfindung wird also der Klebestreifen bzw. die längliche Spur des an dem Klebestreifen anhaftenden Abriebs streifenweise und nicht insgesamt untersucht. Zudem erfolgt die streifenweise Untersuchung quer zur Breite der Abriebspur. Somit werden viele Einzelwerte hinsichtlich des Grauwerts quer zur Abriebspur erfasst, wobei die Auswertung grundsätzlich umso genauer erfolgen kann, je mehr Streifen quer zur Abriebspur untersucht werden.

Anhand der für die einzelnen Streifen ermittelten Grauwerte kann nun beispielsweise ein repräsentativer Grauwert für die gesamte Abriebspur gemittelt werden. Dieser repräsentative Grauwert ist dabei ein Maß für die Abriebeigenschaften der Beschichtung. Je höher der repräsentative Grauwert ist, desto eher neigt die Beschichtung zum Powdering. Durch die Auswertung der vielen einzelnen Streifen kommt es dabei weniger zu einer subjektiven Fehleinschätzung, weil einzelne Streifen besonders dunkel oder recht hell erscheinen. Alternativ oder zusätzlich zu dem repräsentativen Grauwert kann aus den Grauwerten der einzelnen Streifen zudem recht objektiv die Graubreite, d.h. die Breite der durch die Partikel der Beschichtung hervorgerufenen Abriebspur, ermittelt werden. Es ist anhand der Grauwerte der einzelnen Streifen so beispielsweise klarer ersichtlich, wo die Abriebspur in einer Richtung quer zu dieser beginnt und endet bzw. wie breit die Abriebspur tatsächlich ist. Mit anderen Worten kann die Abriebspur leichter von Schmutzpartikeln unterschieden werden, die unabhängig vom Biegen des beschichteten Flachprodukts an diesem anhaften.

Eine weitere Verbesserung der Reproduzierbarkeit wird dadurch erreicht, dass die Grauwerte nicht einfach an mehreren Stellen quer zur Abriebspur ermittelt werden. Die Grauwerte entlang einzelner Streifen quer zur Abriebspur sind nämlich nicht unbedingt konstant. Es erfolgt demnach eine repräsentative Grauwertermittlung, die der Variation der Grauwerte längs einzelner Streifen Rechnung trägt. Dies erfolgt vorzugsweise dadurch, dass die Grauwerte längs einzelner Streifen gemittelt werden. Einzelne sehr dunkle oder sehr helle Abschnitte entlang eines Streifens oder entlang mehrerer Streifen verfälschen die Bestimmung der Abriebeigenschaften daher nicht nennenswert. Es kommt aber auch eine Integration der Grauwerte entlang der Streifen oder eine andere Art der Zusammenfassung der Grauwerte in Frage.

Zudem wird eine Verbesserung der Bestimmung der Abriebeigenschaften dadurch erreicht, dass die Grauwerte entlang der einzelnen Streifen der Abriebspur auf dem Klebestreifen nicht subjektiv durch das menschliche Auge, sondern von einer hierfür geeigneten Erfassungseinheit, bestimmt werden. Auf diese Weise wird letztlich eine Objektivierung der Auswertung der Abriebspur erreicht. Hierfür kommen beispielsweise lichtempfindliche Sensoren in Frage. Die Auswertung kann aber auch durch eine Bildverarbeitungseinrichtung erfolgen. Die Bildverarbeitungseinrichtung kann die Abriebspur direkt oder eine Darstellung der Abriebspur bzw. des Klebestreifens auswerten. Bei der direkten Auswertung der Abriebspur kann diese mittels eines Scanners gescannt werden. Alternativ kann auch eine Darstellung der Abriebspur gescannt werden, auch wenn dies grundsätzlich aufwendiger und fehlerträchtiger sein kann. Als Darstellung der Abriebspur bzw. des Klebestreifens kommt beispielsweise eine digitalisierte Aufnahme der Abriebspur bzw. des Klebestreifens, vorzugsweise in einem bekannten Bildformat, in Frage. Die Aufnahme kann von einer Kamera, vorzugsweise einer Digitalkamera erzeugt werden. Bei dem Ermittlungsmittel zur Ermittlung der Graubreite und/oder des repräsentativen Grauwerts kann es sich insbesondere um ein rechnerbasiertes Ermittlungsmittel handeln, das eine softwarebasierte Auswertung der Grauwerte vornimmt.

Es versteht sich in dem vorliegenden Zusammenhang, dass insbesondere ein reproduzierbarer Vergleich von Grauwerten und/oder eine reproduzierbare Auswertung von streifenweise bestimmten Grauwerten der Abriebspur wünschenswert ist. Daher wird zur Bestimmung des repräsentativen Grauwerts vorliegend die Bildung mittlerer Grauwerte sowohl bei der streifenweisen Erfassung der Grauwerte der Abriebspur als auch bei der Bestimmung eines insgesamt repräsentativen Grauwerts der Abriebspur aus den streifenweise ermittelten Grauwerten bevorzugt. Grundsätzlich könnten die repräsentativen Grauwerte entlang der Streifen und/oder quer zur Abriebspur auch integriert oder anderweitig ermittelt werden.

Bei dem beschichteten Flachprodukt handelt es sich insbesondere um ein Metall-, Stahl-, Leichtmetall- und/oder Verbundflachprodukt, das beispielsweise als Band, Blech, Zuschnitt oder Platine vorliegen kann. Das Flachprodukt kann warm- oder kaltgewalzt sein. Zudem ist ein feuerverzinktes Stahlflachprodukt bevorzugt. Insbesondere handelt es sich um ein galvannealed Stahlblech. Bei dem Abrieb handelt es sich somit vorzugsweise um Abrieb einer Zinkschicht, insbesondere um sogenanntes Powdering. Bei der Zinkschicht handelt es sich zudem insbesondere um eine Zink-Eisen-Schicht.

Das Biegen des beschichteten Flachprodukts erfolgt vorzugsweise indem das Flachprodukt V-förmig entlang einer länglichen Biegelinie gebogen wird. Hierzu wird das Flachprodukt vorzugsweise mit Hilfe eines Biegekeils mit einer länglichen, bedarfsweise abschnittsweise unterbrochenen, Biegekante gebogen. Anschließend kann das Flachprodukt wieder flach gebogen werden.

Hinsichtlich des Klebestreifens ist es bevorzugt, wenn der Abrieb zu dem Klebestreifen einen Kontrast bildet und sich somit hinreichend klar vom Klebestreifen abhebt. Besonders bevorzugt ist es dabei, wenn der Klebestreifen im Wesentlichen transparent ist. Zur besseren Kontrastierung kann auch die Oberfläche der Ausgangsprobe des Flachprodukts mittels Ethanol oder mit einem anderen Reinigungsmittel gereinigt werden.

Im Folgenden werden bevorzugte Ausgestaltungen des Verfahrens und der Vorrichtung zusammen beschrieben, ohne jeweils explizit zwischen dem Verfahren und der Vorrichtung zu unterscheiden. Dem Fachmann werden jedoch anhand des Kontextes die bevorzugten Verfahrens- und Vorrichtungsmerkmale ersichtlich.

Bei einer ersten bevorzugten Ausgestaltung der Erfindung ist vorgesehen, dass aus den bestimmten Grauwerten der Streifen ein Grauwerteverlauf in der Richtung der Breite des Abriebs bzw. der Abriebspur erstellt wird. Hierzu kann die Vorrichtung ein Erstellungsmittel zur Erstellung eines Grauwerteverlaufs aufweisen. Die Erstellung des Grauwerteverlaufs kann dabei softwarebasiert erfolgen. Anhand des entsprechenden Grauwerteverlaufs kann dann recht reproduzierbar die Graubreite als die Breite des Grauwerteverlaufs und damit der Abriebspur und/oder der repräsentative Grauwert als der repräsentative Grauwert des Grauwerteverlaufs und damit der Abriebspur ermittelt werden.

Zudem ist es hinsichtlich der Reproduzierbarkeit und der Aussagekräftigkeit des ermittelten Kennwerts zur Charakterisierung der Abriebeigenschaften zweckmäßig, wenn anhand des Grauwerteverlaufs die Graubreite als die Breite des einen Grenzgrauwert übersteigenden Grauwerteverlaufs und/oder der repräsentative Grauwert als der repräsentative Grauwert aller den Grenzgrauwert übersteigenden Grauwerte ermittelt wird. Auf diese Weise kann im Großen und Ganzen verhindert werden, dass Grauwerte in die Auswertung einfließen, die nicht auf den Abrieb, sondern beispielsweise auf eine Verschmutzung der untersuchten Probe des Flachprodukts zurückgehen.

Der Grenzgrauwert kann dabei manuell vorgegeben werden, und zwar etwa anhand empirischer Kenngrößen. Bevorzugt wird der Grenzgrauwert jedoch anhand des jeweils auszuwertenden Grauwerteverlaufs, etwa durch ein Grenzgrauwertbestimmungsmittel, festgelegt. Dabei kann der Grenzgrauwert anhand der Gradienten des Grauwerteverlaufs ermittelt werden. Beispielsweise kann der Grenzgrauwert auf einen Wert festgesetzt werden, an dem ein Sprung im Grauwerteverlauf vorhanden ist. Ganz grundsätzlich ist es jedoch bevorzugt, wenn der Grenzgrauwert automatisch anhand des jeweils auszuwertenden Grauwerteverlaufs ermittelt wird, und zwar beispielsweise softwarebasiert, nach entsprechenden Vorgaben.

Für eine unkomplizierte Charakterisierung der Abriebeigenschaften einer Beschichtung ist es zweckmäßig, für jeden Streifen einen repräsentativen, insbesondere mittleren oder integralen, Streifengrauwert zu bestimmen. Gleiches kann alternativ oder zusätzlich für die Bestimmung des repräsentativen Grauwerts für den Abriebstreifen als solchen basierend auf den Grauwerten der einzelnen Streifen erfolgen.

Eine einfache, genaue und vorzugsweise automatisierte Bestimmung der Grauwerte einzelner Streifen kann photometrisch erfolgen, und zwar weiter vorzugsweise direkt oder anhand einer digitalisierten Aufnahme des Klebestreifens durch eine Bildverarbeitungseinrichtung. Bildverarbeitungseinrichtungen und bedarfsweise entsprechende Softwarelösungen zur entsprechenden Bildverarbeitung sind bereits grundsätzlich aus dem Stand der Technik bekannt und bedürfen an dieser Stelle keiner besonderen Beschreibung.

Zur Auswertung des Klebestreifens kann wenigstens eine, vorzugsweise digitalisierte, Aufnahme von dem Klebestreifen erzeugt werden. Dann können die Grauwerte streifenweise auf Basis der wenigstens einen Aufnahme bestimmt werden, und zwar insbesondere durch eine Bildverarbeitungseinrichtung wie zuvor angegeben. Die Aufnahme kann dabei vorzugsweise von dem in Durchlicht oder Auflicht beleuchteten Klebestreifen erfolgen. Durchlicht bedeutet, dass der Klebestreifen von der der Kamera abgewandten Seite des Klebestreifens beleuchtet wird. Auflicht bedeutet dagegen, dass die Beleuchtung des Klebestreifens von der gleichen Seite erfolgt, von der die Kamera die Aufnahme vom Klebestreifen erzeugt.

Die Güte der Auswertung kann dabei grundsätzlich gesteigert werden, wenn mehrere Aufnahmen von dem Klebestreifen erzeugt werden und diese Aufnahmen zur Erhöhung des Kontrasts bzw. der Tieferschärfe zu einer neuen Darstellung überlagert werden. Die Aufnahmen können dabei mit verschiedenen Belichtungszeiten erfolgen, wobei einzelne Aufnahmen überbelichtet und/oder unterbelichtet sein können. Die Aufnahmen können sich alternativ oder zusätzlich auch dadurch unterscheiden, dass einzelne bei Beleuchtung in Durchlicht und einzelne bei Beleuchtung in Auflicht erzeugt werden.

Alternativ oder zusätzlich kann für eine genauere Auswertung des Klebestreifens dieser streifenweise zur Bestimmung von Grauwerten quer zur Breite des Abriebs, insbesondere der Abriebspur, gescannt werden. Es wird dann also nicht der gesamte Streifen als solcher erfasst, sondern die Bestimmung des Grauwerts erfolgt schrittweise entlang des Streifens. Das streifenweise Scannen kann dabei bedarfsweise von einem handelsüblichen Scanner durchgeführt werden, der den Klebestreifen oder eine Darstellung des Klebestreifens streifenweise oder bezogen auf den Scanner zeilenweise scannt und jeder Zeile einen repräsentativen Grauwert zuweist.

Um die Reproduzierbarkeit und Aussagekraft der Auswertung zu erhöhen, können die Grauwerte von wenigstens 20 Streifen, vorzugsweise wenigstens 50 Streifen, insbesondere wenigstens 100 Streifen, quer zur Breite des Abriebs, insbesondere der Abriebspur, bestimmt werden.

Zudem hat sich gezeigt, dass gute Auswerteergebnisse erhalten werden können, wenn der Grenzgrauwert 10% - 40%, vorzugsweise 15% - 35%, insbesondere 20% - 30% des Wertebereichs vom minimalen Grauwert bis zum maximalen Grauwert beträgt. Beispielsweise kann der Grauwertbestimmung eine Skala zugrunde gelegt werden, die von 0 für Schwarz bis 255 für Reinweiß reicht. In diesem Fall ist es bevorzugt, wenn der Graugrenzwert zwischen 160 (37%) und 240 (6%), vorzugsweise zwischen 170 (33%) und 220 (14%), insbesondere um 180 (29%) gewählt wird.

Bei galvannealed Stahlflachprodukten besteht ein Zusammenhang zwischen dem Eisengehalt der Zinkbeschichtung und der Powderingneigung der Beschichtung derart, dass die Powderingneigung mit dem Eisengehalt der Zinkbeschichtung zunimmt. Dabei weist die Zinkbeschichtung grundsätzlich einen umso höheren Eisengehalt auf, je stärker und länger das Flachprodukt geglüht wird. Daher kann es zweckmäßig sein, diesen Zusammenhang für ein zu untersuchendes beschichtetes Flachprodukt aufzunehmen, indem die Graubreite und/oder der repräsentative Grauwert in Anhängigkeit des Eisengehalts der Beschichtung ermittelt wird. Dies kann insbesondere für einen konstanten Grenzgrauwert oder unabhängig voneinander für unterschiedliche Grenzgrauwerte erfolgen. So kann beispielsweise anhand der wenigstens einen ermittelten Korrelation der Grenzgrauwert festgelegt werden oder überprüft werden, ob ein Grenzgrauwert zu plausiblen Ergebnissen führt. Optimalerweise sollten die für den wenigstens einen Grenzgrauwert oder den bestimmten Grenzgrauwert ermittelten Wertepaare von Graubreite und/oder repräsentativem Grauwert zu Eisengehalt eine hohe Korrelation und einen plausiblen Kurvenverlauf ergeben.

Vorzugsweise kann basierend auf der für ein beschichtetes Flachprodukt einmal bestimmten Anhängigkeit von Grauwertbreite und/oder des repräsentativen Grauwerts zu Eisengehalt, die vorzugsweise für einen konstanten Grenzgrauwert oder separat für verschiedene Grenzgrauwerte ermittelt wurden, der Einsengehalt einer Flachproduktprobe bestimmt werden. Dazu ist es dann lediglich erforderlich, die Graubreite und/oder den repräsentativen Grauwert zu bestimmen. Es wird also durch die Auswertung auch ein Rückschluss auf den Eisengehalt möglich. Entweder kann dann die Graubreite und/oder der mittlere Grauwert oder aber direkt der Eisengehalt als die Abriebeigenschaften bestimmende Größe angegeben werden.

Wenn die Anhängigkeit und die Korrelation von Grauwertbreite und/oder repräsentativem Grauwert zu Eisengehalt für unterschiedliche Grenzgrauwerte ermittelt wird, kann daraus ein bevorzugter Grenzgrauwert für die Bestimmung der Grauwertbreite und/oder des repräsentativen Grauwerts von entsprechenden Flachprodukten ermittelt werden. Dabei wird vorzugsweise der Grenzgrauwert gewählt, bei dem die Wertepaare zwischen Graubreite und/oder den repräsentativen Grauwert einerseits und dem Eisengehalt andererseits einen möglichst plausiblen Verlauf aufweisen und zu diesem Verlauf möglicht optimal korrelieren. Bei einer schlechten Korrelation werden Messwertwolken erhalten, die nur sehr ungenau durch eine Ausgleichkurve angenähert werden können. Bei einer guten Korrelation liegen alle Messwerte sehr nahe an einer dementsprechend sehr gut an die Messwerte anzunähernden Ausgleichkurve, insbesondere Ausgleichgerade.

Alternativ oder zusätzlich kann für bestimmte beschichtete Flachprodukte nicht nur die Graubreite und/oder der repräsentative Grauwert, sondern auch der Eisengehalt, etwa analytisch, bestimmt werden. Basierend auf der für ein beschichtetes Flachprodukt einmal bestimmten Anhängigkeit von Graubreite und/oder repräsentativem Grauwert einerseits zu Eisengehalt andererseits, die vorzugsweise für einen konstanten Grenzgrauwert oder separat für verschiedene Grenzgrauwerte ermittelt wird, kann dann überprüft werden, wie der entsprechende Messwert mit der entsprechenden Abhängigkeit übereinstimmt. Dies lässt sich durch eine Kenngröße für die Korrelation des Wertepaars mit der zuvor bestimmten mathematischen Anhängigkeit ausdrücken. Deutet die Kenngröße eine zu große Abweichung zwischen der zuvor bestimmten Abhängigkeit an, muss gegebenenfalls eingegriffen oder eine erneute Kalibrierung durchgeführt werden. Weiter vorzugsweise wird die Kenngröße nicht für jede Messung sondern eine bestimmte Mehrzahl aufeinanderfolgender Messungen durchgeführt, damit einzelnen Ausreißern keine übermäßige Relevanz beigemessen wird.

Die Kenngröße für die Korrelation kann beispielsweise zum Zwecke der Qualitätssicherung hinsichtlich der Ermittlung der Abriebeigenschaften eines beschichteten Flachprodukts verwendet werden. So kann gegebenenfalls der Nachweis erbracht werden, dass die Bestimmung der Abriebeigenschaften mit hinreichender Genauigkeit und Reproduzierbarkeit erfolgt. Beispielsweise kann die Kenngröße dazu mit einem vorgegebenen Kenngrößengrenzwert verglichen werden. Ist die Abweichung größer als ein vorgegebener Wert, kann dies signalisiert bzw. angezeigt werden. Dies kann dem Zweck dienen, dass ein entsprechender Eingriff oder eine erneute Kalibrierung erfolgt. Alternativ oder zusätzlich kann die ermittelte Graubreite und/oder der repräsentative Grauwert auch mit einer zusätzlichen Information verknüpft werden, die kenntlich macht, dass die Aussagekraft der entsprechenden Werte vermindert ist.

Nachfolgend wird die Erfindung anhand einer lediglich ein Ausführungsbeispiel darstellenden Zeichnung näher erläutert. In der Zeichnung zeigt
- Fig. 1: ein Detail einer erfindungsgemäßen Einrichtung zur Ermittlung der Abriebeigenschaften eines beschichteten Flachprodukts,
- Fig. 2: ein beschichtetes Flachprodukt mit einem Klebestreifen zur Durchführung des erfindungsgemäßen Verfahrens zur Ermittlung der Abriebeigenschaften in Draufsicht,
- Fig. 3: den Klebestreifen mit einer Abriebspur aus Fig. 2,
- Fig. 4: ein Histogramm des Verlaufs der Grauwerte einzelner Streifen quer zur Abriebspur des Klebestreifens aus Fig. 3,
- Fig. 5: eine schematische Darstellung der Einrichtung zur Ermittlung der Abriebeigenschaften eines beschichteten Flachprodukts und
- Fig. 6: eine graphische Darstellung des funktionalen Zusammenhangs zwischen Grauwertbreite und Eisengehalt eines beschichteten Flachprodukts.

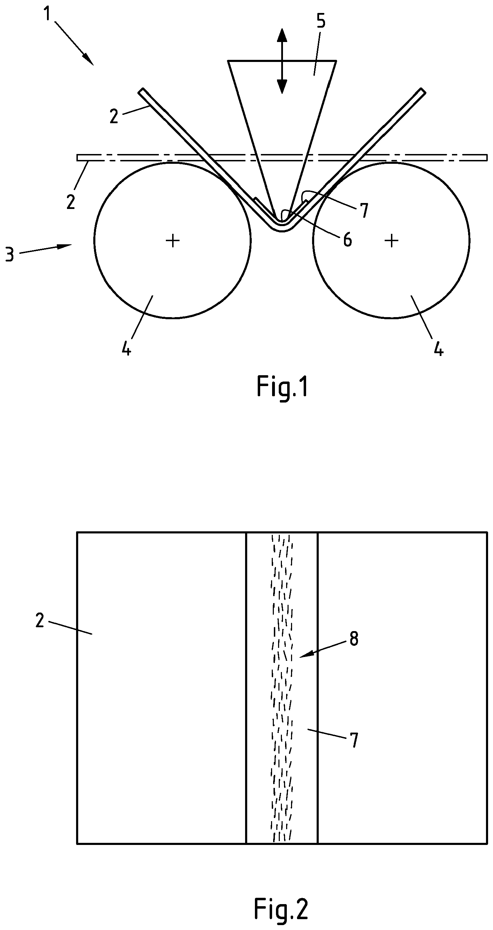

In der Fig. 1 ist ein Detail einer Vorrichtung 1 zum Biegen eines beschichteten Flachprodukts 2 dargestellt. Die Vorrichtung 1 umfasst ein sogenanntes Rollengesenk 3 mit zwei voneinander über einen Spalt beabstandeten Biegerollen 4 und einem Biegekeil 5 mit einem V-förmigen Querschnitt und einer länglichen Kante 6. Auf den Biegerollen 4 wird ein beschichtetes Flachprodukt 2 positioniert, auf dessen Oberseite ein Klebestreifen 7 aufgebracht worden ist. Der Biegekeil 5 kann nun in den Spalt zwischen den Biegerollen 4 abgesenkt werden. Dabei drückt der Biegekeil 5 mit seiner Kante 6 in Längsrichtung auf den auf das Flachprodukt 2 aufgeklebten Klebestreifen 7, wobei sich das Flachprodukt 2 entlang einer durch die Kante 6 des Biegekeils 5 definierten Biegelinie V-förmig nach unten biegt. In der Fig. 1 ist das Flachprodukt 2 in der Ausgangsstellung strichliniert und in der gebogenen Stellung mit durchgezogenen Linien dargestellt. Nach erfolgter Biegung des beschichteten Flachprodukts 2 wird der Biegekeil 5 wieder angehoben und das Flachprodukt 2 durch eine nicht dargestellte Glätteinrichtung wieder zurück gebogen bzw. wieder geglättet.

Das Flachprodukt 2 im zurückgebogenen bzw. geglätteten Zustand ist in der Fig. 2 in Draufsicht von oben dargestellt. Man erkennt schematisch dargestellt infolge Powdering beim Biegen ausgebrochene Partikel der Beschichtung entlang der Biegelinie des Flachprodukts 2, die sich als Abriebspur 8 abzeichnen. Der Klebestreifen 7 wird zur Auswertung von dem beschichteten Flachprodukt 2 abgezogen, wobei die ausgebrochenen Partikel der Beschichtung als Abrieb an dem Klebestreifen 7 haften bleiben. Von dem Klebestreifen 7 werden anschließend mittels einer Digitalkamera Aufnahmen erzeugt. Dabei wird der Klebestreifen 7 sowohl von der gleichen Seite beleuchtet, von der die Aufnahmen erzeugt werden (Auflicht), als auch von der gegenüberliegenden Seite beleuchtet (Durchlicht). Während jeder der beiden Beleuchtungssituationen werden unterschiedlich belichtete Aufnahmen erzeugt, die teilweise überbelichtet und teilweise unterbelichtet sind. Aus den insgesamt erzeugten Aufnahmen wird anschließend softwarebasiert durch Überlagerung eine Darstellung von dem Klebestreifen 7 mit erhöhtem Kontrast bzw. Tiefenschärfe erzeugt.

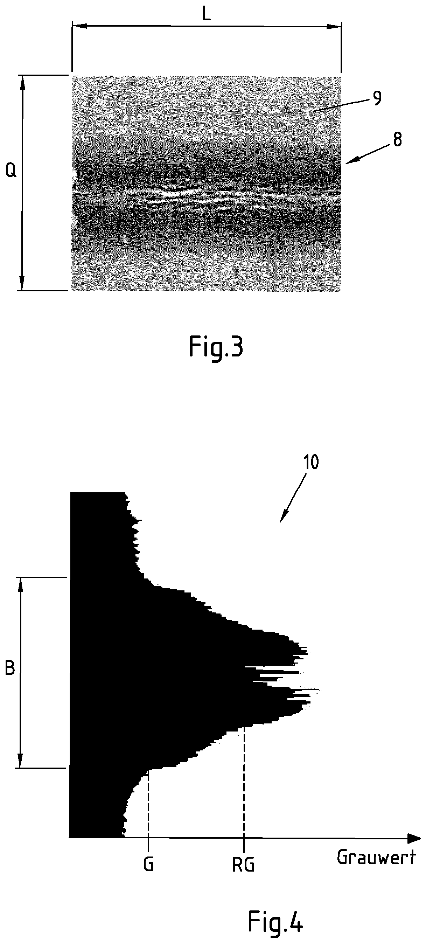

Die in der Fig. 3 wiedergegebene Darstellung 9 des Klebestreifens 7 wird anschließend in einer Bildverarbeitungseinrichtung analysiert. Dabei wird die Darstellung 9 des Klebestreifens 7 streifenweise gescannt, und zwar jeweils in einer Richtung längs zur Darstellung 9 des Klebestreifens 7 und der Abriebspur 8, die parallel zu dem Doppelpfeil L ist. Auf diese Weise wird streifenweise ein Grauwert der Abriebspur 8 ermittelt. Der Grauwert jedes Streifens wird dabei über seine Länge gemittelt, so dass für jeden Streifen ein Grauwert in Form eines mittleren Grauwerts erhalten wird. Anschließend wird anhand der mittleren Grauwerte der einzelnen Streifen ein Grauwerteverlauf 10 quer zur Abriebspur nach Art eines Histogramms erzeugt. Die Richtung quer zur Abriebspur, ist durch den Doppelpfeil Q symbolisiert.

Der Grauwerteverlauf 10 in Form des Histogramms ist in der Fig. 4 dargestellt, wobei jeder Streifen durch einen Querbalken im Histogramm repräsentiert wird. Die gescannten Streifen weisen wie die Querbalken eine konstante Breite auf. Je länger ein Balken ist, desto dunkler ist der repräsentative Grauwert für den entsprechenden Streifen. Dies wird durch die Abszisse dargestellt, auf der der Grauwert aufgetragen ist. Man erkennt eindeutig, dass die Streifen in der Mitte des Klebestreifens 7 dunkler sind als am Rand des Klebestreifens 7. Die Ränder des Klebestreifens 7 sind in der Grauwerteverteilung 10 oben und unten dargestellt. Bei dem Grauwerteverlauf 10 steigen die Grauwerte daher von den Rändern gesehen langsam an. Ab einem bestimmten Grauwert tritt jedoch ein im Vergleich zu dem vorhergehenden Anstieg sprunghafter Anstieg auf. Dieser Grauwert wird als Grenzgrauwert G bestimmt. Es werden nur mittlere Grauwerte des Grauwerteverlaufs 10 berücksichtig, die größer als der Grenzgrauwert G sind. Nun wird die Breite des Grauwerteverlaufs 10 für die Grauwerte bestimmt, die größer sind als der Grenzgrauwert. Diese Breite ist die Graubreite B der Abriebspur 8 auf dem Klebestreifen 7. Zudem werden die Werte aller mittleren Grauwerte, die größer sind als der Grenzgrauwert G, gemittelt. Der resultierende mittlere Grauwert ist der repräsentative Grauwert RG der Abriebspur 8. Der repräsentative Grauwert RG und die Graubreite B stellen jeweils separat und gemeinsam reproduzierbare Kenngrößen für die Abriebeigenschaften für das untersuchte beschichtete Flachprodukt 2 dar.

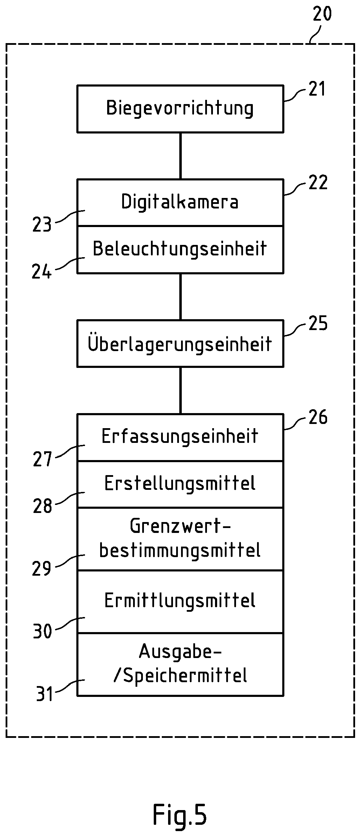

Die Einrichtung 20 zur Durchführung des zuvor beschriebenen Verfahrens zur Ermittlung der Abriebeigenschaften eines beschichteten Flachprodukts 2 ist schematisch in der Fig. 5 dargestellt. Die Einrichtung 20 umfasst eine Biegevorrichtung 21 gemäß Fig. 1 zum Biegen eines beschichteten Flachprodukts 2 und zum anschließenden Glätten, um in reproduzierbarer Weise Abrieb zu erzeugen, der auf einem Klebestreifen 7 haften bleibt. Ferner umfasst die Einrichtung 20 eine Vorrichtung 22 zum Erzeugen einer Darstellung 9 des Klebestreifens 7 umfassend eine Digitalkamera 23 und eine Beleuchtungseinheit 24 zur Beleuchtung des Klebestreifens 7, während die Digitalkamera 23 Aufnahmen vom Klebestreifen 7 erzeugt. Des Weiteren ist eine Überlagerungseinheit 25 zur Überlagerung der Aufnahmen zu einer sehr kontrastreichen Darstellung 9 des Klebestreifens 7 vorgesehen. Diese Darstellung 9 dient als Referenz für die Vorrichtung 26 zur Ermittlung der Abriebeigenschaften eines beschichteten Flachprodukts 2. Diese Vorrichtung 26 umfasst eine Erfassungseinheit 27 in Form einer Bildverarbeitungseinrichtung. Diese scannt die Darstellung 9 des Klebestreifens 7 streifenweise ab und bestimmt für jeden Streifen einen repräsentativen Grauwert. Ein Erstellungsmittel 28 erstellt aus den repräsentativen Grauwerten der Streifen einen Grauwerteverlauf 10 quer zur Abriebspur 8 des Klebestreifens 7. Zudem ist ein Grenzwertbestimmungsmittel 29 zur Bestimmung eines Grenzgrauwerts G anhand des Grauwerteverlaufs 10 vorgesehen. Im Übrigen ist noch ein Ermittlungsmittel 30 zur Ermittlung der Graubreite und/oder des repräsentativen Grauwerts anhand des Grauwerteverlaufs 10 vorhanden, sowie ein Ausgabe- und Speichermittel 31 zur Ausgabe und Speicherung der ermittelten Werte für die Graubreite und den repräsentativen Grauwert.

Beim dargestellten und insoweit bevorzugten Verfahren und der entsprechenden Vorrichtung werden die repräsentative Graubreite in mm und der Grauwert als Wert zwischen 0 für völlig schwarz und 255 für Reinweiß angegeben. Andere Maßangaben sind jedoch denkbar.

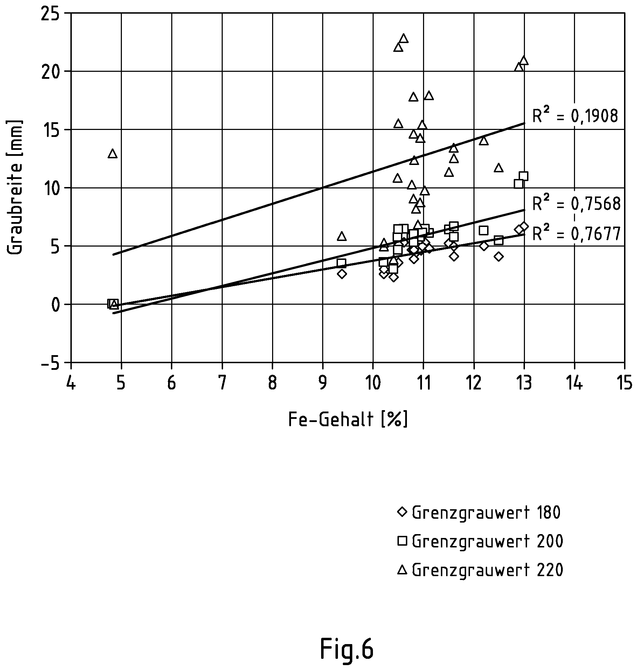

In der Fig. 6 ist ein Diagramm dargestellt, auf dem auf der Abszisse der Eisengehalt der Beschichtung und auf der Ordinate die Graubreite abgetragen ist. Eingetragen in das Diagramm sind Graubreiten die abhängig von dem Eisengehalt für bestimmte Grenzgrauwerte (180, 200 und 220) ermittelt wurden. An die Messwerte für jeden Grenzgrauwert ist eine Gerade angenähert worden, wobei jeweils die Güte der Korrelation (R²) der Ausgleichsgeraden mit den Messwerten angeben ist. Es ergibt sich in diesem Fall, dass die Korrelation für einen Grenzgrauwert von 180 am höchsten ist (R²=0,7677). Daher kann der Grenzgrauwert von 180 der späteren Auswertung von Flachprodukten desselben Typs herangezogen werden, um möglichst reproduzierbare Ergebnisse zu erhalten. Da der Abrieb mit dem Eisengehalt korreliert, führen Grenzgrauwerte, die diese Korrelation besonders gut wiedergeben zu besonders aussagekräftigen und reproduzierbaren Ergebnissen.

## Patentansprüche

1. Verfahren zur Ermittlung der Abriebeigenschaften eines beschichteten Flachprodukts (2), vorzugsweise Metallflachprodukt, insbesondere verzinktes Stahlflachprodukt, bei dem ein Klebestreifen (7) auf die Beschichtung des Flachprodukts (2) aufgeklebt wird, bei dem das Flachprodukt (2) in dem mit dem Klebestreifen (7) versehenen Bereich gebogen wird, bei dem der Klebestreifen (7) nach dem Biegen zusammen mit am Klebestreifen (7) haftendem Abrieb der Beschichtung abgezogen wird, **dadurch gekennzeichnet, dass** streifenweise quer zur Breite des eine Abriebspur bildenden Abriebs die Grauwerte des Klebestreifens (7) bestimmt werden, und anhand der streifenweise bestimmten Grauwerte und einem Grenzgrauwert (G) eine Graubreite (B) als die Breite der Abriebspur und/oder ein repräsentativer Grauwert der Abriebspur ermittelt wird.

2. Verfahren nach Anspruch 1,
bei dem aus den bestimmten Grauwerten der Streifen ein Grauwerteverlauf (10) in der Richtung der Breite der Abriebspur erstellt wird und bei dem anhand des Grauwerteverlaufs (10) die Graubreite (B) als die Breite des Grauwerteverlaufs und/oder der repräsentative Grauwert (RG) als der repräsentative Grauwert des Grauwerteverlaufs ermittelt wird.

3. Verfahren nach Anspruch 2,
bei dem anhand des Grauwerteverlaufs (10) die Graubreite (B) als die Breite des den Grenzgrauwert (G) übersteigenden Grauwerteverlaufs (10) und/oder der repräsentative Grauwert (RG) als aller den Grenzgrauwert (G) übersteigenden Grauwerte ermittelt wird.

4. Verfahren nach Anspruch 2 oder 3,
bei dem der Grenzgrauwert (G), vorzugsweise automatisch, anhand des Grauwerteverlaufs (10), vorzugsweise der Gradienten des Grauwerteverlaufs (10), festgelegt wird.

5. Verfahren nach einem der Ansprüche 1 bis 4,
bei dem für jeden Streifen ein mittlerer oder integraler Streifengrauwert bestimmt wird.

6. Verfahren nach einem der Ansprüche 1 bis 5,
bei dem die streifenweise Bestimmung der Grauwerte photometrisch, vorzugsweise durch eine Bildverarbeitungseinrichtung, erfolgt.

7. Verfahren nach Anspruch 6,
bei dem wenigstens eine, vorzugsweise digitalisierte, Aufnahme von dem Klebestreifen 7 erzeugt wird und bei dem die Grauwerte auf Basis der wenigstens einen Aufnahme bestimmt werden.

8. Verfahren nach Anspruch 7,
bei dem mehrere Aufnahmen von dem Klebestreifen 7 erzeugt und zur Erhöhung der Tiefenschärfe zu einer neuen Darstellung 9 überlagert werden.

9. Verfahren nach einem der Ansprüche 1 bis 8,
bei dem der Klebestreifen (7) zur Bestimmung von Grauwerten streifenweise quer zur Breite der Abriebspur gescannt wird.

10. Verfahren nach einem der Ansprüche 1 bis 9,
bei dem die Grauwerte von wenigstens 20 Streifen, vorzugsweise wenigstens 50 Streifen, insbesondere wenigstens 100 Streifen quer zur Breite der Abriebspur bestimmt werden.

11. Verfahren nach einem der Ansprüche 3 bis 10,
bei dem der Grenzgrauwert (G) 10% - 40%, vorzugsweise 15% - 35%,
insbesondere 20% - 30% des Wertebereichs vom minimalen Grauwert bis zum maximalen Grauwert beträgt.

12. Verfahren nach einem der Ansprüche 1 bis 11,
bei dem für das beschichtete Flachprodukt (2) die Graubreite (B) und/oder der repräsentative Grauwert, insbesondere für wenigstens einen Grenzgrauwert (G), in Anhängigkeit des Eisengehalts der Beschichtung aufgenommen wird.

13. Verfahren nach Anspruch 12,
bei dem basierend auf der bestimmten Anhängigkeit von Graubreite (B) und/oder repräsentativem Grauwert (RG) zu Eisengehalt, insbesondere für wenigstes einen Grenzgrauwert (G), sowie der ermittelten Graubreite (B) und/oder des repräsentativen Grauwerts (RG) ein Eisengehalt bestimmt wird.

14. Verfahren nach Anspruch 12 oder 13,
bei dem basierend auf der bestimmten Anhängigkeit von Graubreite (B) und/oder repräsentativem Grauwert (RG) zu Eisengehalt für unterschiedliche Grenzgrauwerte (G) ein Grenzgrauwert (G) für die Bestimmung der Graubreite (B) und/oder des repräsentativen Grauwerts (RG) festgelegt wird.

15. Verfahren nach Anspruch 12 bis 14,
bei dem für bestimmte beschichtete Flachprodukte (2), für die die Graubreite (B) und/oder der repräsentative Grauwert (RG) bestimmt wird, zusätzlich der Eisengehalt der Beschichtung bestimmt wird und bei dem basierend auf der bestimmten Anhängigkeit von Graubreite (B) und/oder repräsentativem Grauwert (RG) zu Eisengehalt, insbesondere für wenigstens einen Grenzgrauwert (G), sowie der zusätzlich bestimmten Wertepaare von Eisengehalt einerseits und Graubreite (B) und/oder repräsentativem Grauwert (RG) andererseits eine Kenngröße für die Korrelation der zusätzlich bestimmten Wertepaare mit der bestimmten Abhängigkeit von Graubreite (B) und/oder repräsentativem Grauwert (RG) zu Eisengehalt bestimmt wird.

16. Verfahren nach Anspruch 15,
bei dem die Kenngröße für die Korrelation zum Zwecke der Qualitätssicherung hinsichtlich der Ermittlung der Abriebeigenschaften eines beschichteten Flachprodukts (2) verwendet wird und, vorzugsweise, bei dem zum Zwecke der Qualitätssicherung die Kenngröße mit einem vorgegebenen Kenngrößengrenzwert verglichen wird.

17. Vorrichtung (26) zur Ermittlung der Abriebeigenschaften eines beschichteten Flachprodukts (2), vorzugsweise nach einem Verfahren gemäß einem der Ansprüche 1 bis 16,
**dadurch gekennzeichnet, dass** eine Erfassungseinheit (26), insbesondere Bildverarbeitungseinrichtung, zur streifenweisen Bestimmung von Grauwerten eines Klebestreifens (7) und/oder einer Darstellung (9) eines Klebestreifens (7) quer zur Breite von auf dem Klebestreifen (7) haftendem eine Abriebspur bildendem Abrieb vorgesehen ist und dass ein Ermittlungsmittel (30) zur Ermittlung einer Graubreite (B) als die Breite der Abriebspur und/oder eines repräsentativen Grauwerts (RG) der Abriebspur anhand der streifenweise bestimmten Grauwerte und einem Grenzgrauwert (G) vorgesehen ist.

18. Vorrichtung nach Anspruch 17,
**dadurch gekennzeichnet, dass** ein Erstellungsmittel (28) zur Erstellung eines Grauwerteverlaufs (10) anhand der streifenweise bestimmten Grauwerte und ein Ermittlungsmittel (30) zur Ermittlung der Graubreite (B) und/oder des repräsentativen Grauwerts (RG) anhand der Grauwerteverteilung (10) vorgesehen sind.

19. Vorrichtung nach Anspruch 17 oder 18,
**dadurch gekennzeichnet, dass** ein Grenzwertbestimmungsmittel (29) zur Bestimmung des Grenzgrauwerts (G) anhand des Grauwerteverlaufs (10), vorzugsweise der Gradienten des Grauwerteverlaufs (10), vorgesehen ist.

20. Vorrichtung nach einem der Ansprüche 17 bis 19,
**dadurch gekennzeichnet, dass** wenigstens eine Digitalkamera (23) zur Aufnahme wenigstens einer, vorzugsweise digitalisierten, Aufnahme von dem Klebestreifen (7) vorgesehen ist.

## Claims

1. Method for determining the abrasion properties of a coated flat product (2), preferably a metal flat product, preferably a galvanised steel flat product, in which an adhesive strip (7) is stuck to the coating of the flat product (2), in which the flat product (2) is bent in the region provided with the adhesive strip (7), in which the adhesive strip (7) after the bending is removed together with abrasion material of the coating adhering to the adhesive strip (7), **characterized in that** the grey tones of the adhesive strip are determined stripe by stripe crossways to the width of the abrasion forming an abrasion mark and **in that** on the basis of the grey tones determined stripe by stripe and a grey tone limit value (G) a grey width (B) is determined as the width of the abrasion mark and/or a representative grey tone of the abrasion mark.

2. Method according to Claim 1, in which from the determined grey tones of the stripes a grey tone pattern (10) is generated in the direction of the width of the abrasion mark and in which on the basis of the grey tone pattern (10) the grey width (B) is determined as the width of the grey tone pattern and/or the representative grey tone (RG) is determined as the representative grey tone of the grey tone pattern.

3. Method according to Claim 2, in which on the basis of the grey tone pattern (10) the grey width (B) is determined as the width of the grey tone pattern (10) exceeding the grey tone limit value (G) and/or the representative grey tone (RG) is determined as all grey tones exceeding the grey tone limit value (G).

4. Method according to Claim 2 or 3, in which the grey tone limit value (G) is fixed, preferably automatically, on the basis of the grey tone pattern (10), preferably on the basis of the gradients of the grey tone pattern (10).

5. Method according to any one of Claims 1 to 4, in which a mean or integral stripe grey tone is determined for each stripe.

6. Method according to any one of Claims 1 to 5, in which the determination of the grey tones stripe by stripe takes place photometrically, preferably by means of an image processing device.

7. Method according to Claim 6, in which at least one, preferably digitised, recording of the adhesive strip (7) is generated and in which the grey tones are determined on the basis of the at least one recording.

8. Method according to Claim 7, in which several recordings are generated from the adhesive strip (7) and in order to improve the sharpness of depth are superimposed to form a new representation (9).

9. Method according to any one of Claims 1 to 8, in which the adhesive strip (7) is scanned to determine grey tones stripe by stripe crossways to the width of the abrasion mark.

10. Method according to any one of Claims 1 to 9, in which the grey tones of at least 20 stripes, preferably at least 50 stripes, in particular at least 100 stripes, are determined crossways to the width of the abrasion mark.

11. Method according to any one of Claims 3 to 10, in which the grey tone limit value (G) is 10%-40%, preferably 15%-35%, in particular 20%-30% of the value range from the minimum grey tone up to the maximum grey tone.

12. Method according to any one of Claims 1 to 11, in which for the coated flat product (2) the grey width (B) and/or the representative grey tone, in particular for at least one grey tone limit value (G), is recorded depending on the iron content of the coating.

13. Method according to Claim 12, in which an iron content is determined on the basis of the determined dependence of the grey width (B) and/or representative grey tone (RG) on the iron content, in particular for at least one grey tone limit value (G), as well as on the basis of the determined grey width (B) and/or the representative grey tone (RG).

14. Method according to Claim 12 or 13, in which on the basis of the determined dependence of the grey width (B) and/or representative grey tone (RG) on the iron content for different grey tone limit values (G), a grey tone limit value (G) is specified for the determination of the grey width (B) and/or the representative grey tone (RG).

15. Method according to Claims 12 to 14, in which for specific coated flat products (2), for which the grey width (B) and/or the representative grey tone (RG) is determined, additionally the iron content of the coating is determined and in which, based on the determined dependence of the grey width (B) and/or representative grey tone (RG) on the iron content, in particular for at least one grey tone limit value (G) as well as the additionally determined pairs of values of iron content on the one hand and grey width (B) and/or representative grey tone (RG) on the other hand, a characteristic value is determined for the correlation of the additionally determined pairs of values with the determined dependence of the grey width (B) and/or representative grey tone (RG) on the iron content.

16. Method according to Claim 15, in which the characteristic value for the correlation is used for the purpose of quality assurance with regard to the determination of the abrasion properties of a coated flat product (2) and, preferably, in which for the purposes of quality assurance the characteristic value is compared with a predetermined characteristic value limit.

17. Device (26) for determining the abrasion properties of a coated flat product (2), preferably by a method according to any one of Claims 1 to 16, **characterised in that** a detection unit (26), in particular an image processing device, is provided for the stripe by stripe determination of grey tones of an adhesive strip (7) and/or of a representation (9) of an adhesive strip (7) crossways to the width of abrasion material forming an abrasion mark adhering to the adhesive strip (7), and that a determination means (30) is provided for determining a grey width (B) as the width of the abrasion mark and/or of a representative grey tone (RG) of the abrasion mark on the basis of the grey tones determined stripe by stripe and a grey tone limit value (G).

18. Device according to Claim 17, **characterised in that** a generating means (28) is provided for generating a grey tone pattern (10) on the basis of the grey tones determined stripe by stripe and a determination means (30) is provided for determining the grey width (B) and/or the representative grey tone (RG) on the basis of the grey tone distribution (10).

19. Device according to Claim 17 or 18, **characterised in that** a limit value determining means (29) is provided for determining the grey tone limit value (G) on the basis of the grey tone pattern (10), preferably on the basis of the gradients of the grey tone pattern (10).

20. Device according to any one of Claims 17 to 19, **characterised in that** at least one digital camera (23) is provided for recording at least one, preferably digitised, recording from the adhesive strip (7).

## Revendications

1. Procédé de détermination des propriétés d'usure abrasive d'un produit plat (2), de préférence d'un produit plat métallique, notamment d'un produit plat en acier galvanisé, pourvu d'un revêtement, selon lequel un ruban adhésif (7) est collé sur le revêtement du produit plat (2), selon lequel le produit plat (2) est plié dans la zone pourvue du ruban adhésif (7), selon lequel après pliure, le ruban adhésif (7) est retiré conjointement avec les particules d'abrasion du revêtement qui ont adhéré au ruban adhésif (7), **caractérisé en ce que** les valeurs de gris du ruban adhésif (7) sont déterminées sous forme de bande dans le sens perpendiculaire à la largeur de l'usure abrasive formant la trace d'usure abrasive, et, à l'appui des valeurs de gris déterminées sous forme de bande et d'une valeur de gris limite (G), l'on détermine une largeur de l'échelle de gris (B) en tant que largeur d'une trace d'usure abrasive et/ou une valeur de gris représentative de la trace d'usure abrasive.

2. Procédé selon la revendication 1,
selon lequel, à partir des valeurs de gris déterminées des bandes, un tracé des valeurs de gris (10) en direction de la largeur de la trace d'usure abrasive est établi et selon lequel, à l'appui du tracé des valeurs de gris (10), l'on détermine la largeur de l'échelle de gris (B) en tant que largeur du tracé des valeurs de gris et/ou la valeur de gris représentative (RG) en tant que valeur de gris représentative du tracé des valeurs de gris.

3. Procédé selon la revendication 2,
selon lequel, à l'appui du tracé des valeurs de gris (10), l'on détermine la largeur de l'échelle de gris (B) en tant que largeur du tracé des valeurs de gris (10) supérieure à la valeur de gris limite (G) et/ou la valeur de gris représentative (RG) en tant que toutes valeurs de gris supérieures à la valeur de gris limite (G).

4. Procédé selon la revendication 2 ou 3,
selon lequel la valeur de gris limite (G) est fixée, de préférence automatiquement, à l'appui du tracé des valeurs de gris (10), de préférence à l'appui des gradients du tracé des valeurs de gris (10).

5. Procédé selon l'une des revendications 1 à 4,
selon lequel, pour chaque bande, l'on détermine une valeur de gris de bande moyenne ou intégrale.

6. Procédé selon l'une des revendications 1 à 5,
selon lequel la détermination sous forme de bande des valeurs de gris a lieu de manière photométrique, de préférence à l'aide d'un dispositif de traitement d'image.

7. Procédé selon la revendication 6,
selon lequel au moins un enregistrement, de préférence numérique, du ruban adhésif (7) est généré et selon lequel les valeurs de gris sont déterminées en fonction d'au moins un enregistrement.

8. Procédé selon la revendication 7,
selon lequel plusieurs enregistrements du ruban adhésif (7) sont générés et sont superposés en une nouvelle représentation (9) pour une augmentation de la profondeur de champs.

9. Procédé selon l'une des revendications 1 à 8,
selon lequel le ruban adhésif (7) est balayé pour déterminer les valeurs de gris sous forme de bande dans le sens perpendiculaire à la largeur de la trace d'usure abrasive.

10. Procédé selon l'une des revendications 1 à 9,
selon lequel les valeurs de gris d'au moins 20 bandes, de préférence d'au moins 50 bandes, notamment d'au moins 100 bandes sont déterminées dans le sens perpendiculaire à la largeur de la trace d'usure abrasive.

11. Procédé selon l'une des revendications 3 à 10,
selon lequel la valeur de gris limite (G) est de 10 % - 40 %, de préférence de 15 % - 35 %, notamment de 20 % - 30 % de la plage des valeurs allant de la valeur de gris minimale jusqu'à la valeur de gris maximale.

12. Procédé selon l'une des revendications 1 à 11,
selon lequel, pour le produit plat (2) pourvu d'un revêtement, la largeur de l'échelle de gris (B) et/ou la valeur de gris représentative, notamment pour au moins une valeur de gris limite (G), est enregistrée en fonction de la teneur en fer du revêtement.

13. Procédé selon la revendication 12,
selon lequel en fonction de la dépendance déterminée de la largeur de l'échelle de gris (B) et/ou de la valeur de gris représentative (RG) en termes de teneur de fer, notamment pour au moins une valeur de gris limite (G), l'on détermine une teneur en fer de la largeur de l'échelle de gris (B) déterminée et/ou de la valeur de gris représentative (RG).

14. Procédé selon la revendication 12 ou 13,
selon lequel en fonction de la dépendance déterminée de la largeur de l'échelle de gris (B) et/ou de la valeur de gris représentative (RG) en termes de teneur de fer pour différentes valeurs de gris limites (G), l'on détermine une valeur de gris limite (G) pour déterminer la largeur de l'échelle de gris (B) et/ou la valeur de gris représentative (RG).

15. Procédé selon la revendication 12 à 14,
selon lequel, pour certains produits plats (2) pourvus d'un revêtement, pour lesquels l'on détermine la largeur de l'échelle de gris (B) et/ou la valeur de gris représentative (RG), l'on détermine en outre la teneur en fer du revêtement et selon lequel, en fonction de la dépendance déterminée de la largeur de l'échelle de gris (B) et/ou de la valeur de gris représentative (RG) en termes de teneur en fer, notamment pour au moins une valeur de gris limite (G), et des paires de valeurs déterminées supplémentaires de teneur en fer d'une part et de la largeur de l'échelle de gris (B) et/ou de la valeur de gris représentative (RG) d'autre part, l'on détermine un paramètre pour la corrélation des paires de valeurs déterminées supplémentaires avec la dépendance déterminée de la largeur de l'échelle de gris (B) et/ou de la valeur de gris représentative (RG) en termes de teneur en fer.

16. Procédé selon la revendication 15,
selon lequel l'on utilise le paramètre pour la corrélation à des fins d'assurance qualité concernant la détermination des propriétés d'usure abrasive d'un produit plat (2) pourvu d'un revêtement et, de préférence, selon lequel, à des fins d'assurance qualité, le paramètre est comparé à une valeur limite de paramètre prédéterminée.

17. Dispositif (26) de détermination des propriétés d'usure abrasive d'un produit plat (2) pourvu d'un revêtement, de préférence conformément à un procédé selon l'une des revendications 1 à 16,
**caractérisé en ce que** l'on prévoit une unité de détection (26), notamment un dispositif de traitement d'image, pour la détermination sous forme de bande des valeurs de gris d'un ruban adhésif (7) et/ou d'une représentation (9) d'un ruban adhésif (7) dans le sens perpendiculaire à la largeur de l'usure abrasive adhérant au ruban adhésif (7) formant une trace d'usure abrasive et **en ce que** l'on prévoit un moyen de détermination (30) pour déterminer une largeur de l'échelle de gris (B) en tant que largeur de la trace d'usure abrasive et/ou une valeur de gris représentative (RG) de la trace d'usure abrasive à l'appui des valeurs de gris déterminées sous forme de bande et d'une valeur de gris limite (G).

18. Dispositif selon la revendication 17,
**caractérisé en ce que** l'on prévoit un moyen de mise en place (28) pour établir un tracé des valeurs de gris (10) à l'appui des valeurs de gris déterminées sous forme de bande et un moyen de détermination (30) pour déterminer la largeur de l'échelle de gris (B) et/ou la valeur de gris représentative (RG) à l'appui de la distribution des valeurs de gris (10).

19. Dispositif selon la revendication 17 ou 18, **caractérisé en ce que** l'on prévoit un moyen de détermination de valeur limite (29) pour déterminer la valeur de gris limite (G) à l'appui du tracé des valeurs de gris (10), de préférence des gradients du tracé des valeurs de gris (10).

20. Dispositif selon l'une des revendications 17 à 19, **caractérisé en ce que** l'on prévoit au moins une caméra numérique (23) pour enregistrer au moins un enregistrement, de préférence numérique, du ruban adhésif (7).
